# EUROPÄISCHE PATENTSCHRIFT

(11) **EP 2 428 791 B1**
(45) Veröffentlichungstag und Bekanntmachung des Hinweises auf die Patenterteilung: **27.03.2013**
(21) Anmeldenummer: 10009348.3
(22) Anmeldetag: 08.09.2010
(51) Int. Cl.: G01N 21/15, G01N 21/53, G01N 21/85

(54) **Optisches Analysegerät**
Optical analyser
Appareil d'analyse optique

(43) Veröffentlichungstag der Anmeldung: 14.03.2012
(73) Patentinhaber: SICK AG, 79183 Waldkirch (DE)
(72) Erfinder: Schiffler, Ingo, 79115 Freiburg (DE)
(74) Vertreter: Manitz, Finsterwald & Partner GbR

(56) Entgegenhaltungen:
- DE-A1- 3 839 348
- DE-A1- 4 018 844
- DE-A1- 19 843 553
- DE-A1-102005 025 181

## Beschreibung

Die Erfindung betrifft ein optisches Analysegerät zur Analyse eines Mediums in einem Messvolumen mit den Merkmalen des Oberbegriffs des Anspruches 1. Es umfasst ein Gehäuse mit einer Öffnung, einen Flansch zur Halterung des Gehäuses in einer Aufnahmeöffnung des Messvolumens und eine optische Analyseeinheit.

Solche Analysegeräte dienen beispielsweise zur Bestimmung der Konzentration von Gasen oder Staub- oder Rußpartikeln in industriellen Abgasschornsteinen. Hierfür kann zum einen eine Transmissionslichtmessung durchgeführt werden, bei der ein Sendelichtstrahl durch ein Messvolumen - beispielsweise quer durch einen Abgaskanal - geführt wird, wobei mittels eines zugeordneten Lichtempfängers derjenige Anteil des Sendelichts gemessen wird, der den Lichtempfänger lediglich gedämpft beaufschlagt, da ein Teil des Sendelichts von Partikeln oder Molekülen im Messvolumen absorbiert wird. Aus der gemessenen Abschwächung des Sendelichts lässt sich die Konzentration im Messvolumen bestimmen. Eine solche Transmissionslichtmessung kann zum Beispiel auch unter Einsatz eines Reflektors durchgeführt werden, so dass Lichtsender und Lichtempfänger auf derselben Seite des Messvolumens angeordnet werden können und auf der anderen Seite nur der Lichtreflektor vorgesehen ist.

Zum anderen können Streulichtmessungen durchgeführt werden, bei denen das innerhalb des Messvolumens an den Partikeln gestreute Sendelicht detektiert wird. Ein solches optisches Partikelkonzentrationsmessgerät ist in DE 10 2005 025 181 A1 beschrieben.

Derartige Analysegeräte werden zur Beobachtung oder zu Messungen eines Mediums, zum Beispiel eines Gases oder einer Flüssigkeit in dem Messvolumen verwendet. Der Begriff "Messvolumen" wird hier für den Raum verwendet, in dem sich das zu beobachtende oder zu messende Medium befindet beziehungsweise bewegt. Es kann sich dabei also zum Beispiel um ein entsprechendes Behältnis oder einen Kanal oder ein Rohr handeln.

Insbesondere Gasmessgeräte, die über Flansche an Anlagen angekoppelt sind, beinhalten oft eine Spülung, die der Reinhaltung optischer Grenzflächen dient, die sich zum Beispiel in Form von Fenstern zwischen dem Messvolumen und dem Gasmessgerät befinden. Andererseits kann durch eine Spülung der Kontakt zwischen dem Messmedium und dem Gerät vermieden werden, wenn es sich bei dem Messmedium zum Beispiel um ein korrosives Gas handelt. Ein optisches System mit Spülung eines Sichtfensters ist in DE 10 2004 018 534 B4 beschrieben.

Geräte mit einer Spülung besitzen allerdings recht große Totvolumina im Bereich der Ankopplung des Messgeräts an das Messvolumen. Solche Geräte müssen in der Regel auch bei Verwendung von sauberen (also zum Beispiel staubarmen und nicht korrosiven) Applikationen gespült werden, damit der Messwert der Partikelkonzentration nicht über andere Konzentrationen oder ein anderes Zeitverhalten innerhalb der Totvolumina beeinträchtigt wird.

Andererseits sind Geräte ohne eine Spülung im Regelfall nicht für dreckige Medien geeignet und besitzen zudem ein für andere Anwendungen wiederum zu kleines Totvolumen.

Aufgabe der vorliegenden Erfindung ist es, ein optisches Analysegerät anzugeben, mit dem eine flexible Einstellung des Prozessanschlusses an das Messvolumen möglich ist.

Diese Aufgabe wird mit einem optischen Analysegerät mit den Merkmalen des Anspruchs 1 gelöst. Unteransprüche sind auf bevorzugte Ausführungsformen gerichtet.

Das erfindungsgemäße Gerät umfasst einen Flansch zur Halterung des Gehäuses in einer Aufnahmeöffnung des Messvolumens. Das Gehäuse mit der Messanordnung wird also nicht nur einfach an das Messvolumen angeschraubt oder zum Beispiel fest angeschweißt. Stattdessen ist ein Flansch zur Halterung des Gehäuses mit dem Messaufbau vorgesehen.

An dem Gehäuse selbst ist erfindungsgemäß ein Befestigungsstutzen vorgesehen, mit dem das Gehäuse an dem Flansch befestigt werden kann, wobei die Außengeometrie des Befestigungsstutzens an die Innengeometrie des Flansches derart angepasst ist, dass der Befestigungsstutzen in Richtung des Messvolumens und von diesem weg verschoben werden kann. Der Befestigungsstutzen kann eine Dichtung aufweisen, die die Außenseite des Befestigungsstutzens gegenüber der Innenseite des Flansches abdichtet. Erfindungsgemäß ist außerdem eine Klammer vorgesehen, mit der der Flansch und der Befestigungsstutzen form- oder kraftschlüssig in unterschiedlichen Stellungen des Befestigungsstutzens in dem Flansch miteinander verbunden werden können.

In dem Gehäuse befindet sich eine optische Analyseeinheit zur optischen Analyse des Mediums in dem Messvolumen durch die Öffnung des Gehäuses hindurch. Es kann sich dabei zum Beispiel um ein Sendeelement in dem Gehäuse zum Aussenden eines Messlichtstrahles durch die Öffnung in das Messvolumen und ein Empfangselement in dem Gehäuse zum Empfangen von gestreutem oder transmittiertem Licht aus dem Messvolumen handeln.

Bei einer optischen Analyseeinheit ist die in dem Gehäuse enthaltene Messanordnung in der Regel durch ein Sichtfenster abgeschlossen, so dass im Betrieb die Messanordnung (die beim beschriebenen Beispiel aus einem Sendeelement und einem Empfangselement besteht) gegenüber dem Messvolumen abgeschlossen ist.

Ein erfindungsgemäßes optisches Analysegerät ermöglicht es, dass das Gehäuse mit der optischen Analyeeinheit in dem Flansch zur Halterung des Gehäuses in einer Aufnahmeöffnung des Messvolumens verschoben werden kann. Je nach Ausgestaltung und Größe des Flansches kann also eine passende Tiefeneinstellung des Gehäuses in der Aufnahmeöffnung des Messvolumens eingestellt werden. Das erfindungsgemäße Analysegerät ist insofern besonders flexibel. Es kann zum Beispiel ein bündiger Prozessanschluss mit einem kleinen oder gar keinem Totvolumen eingestellt werden, bei dem ein Sichtfenster des Analysegerätes bündig mit der Wandung des Messvolumens ist. Eine solche Einstellung eignet sich insbesondere für saubere, nicht korrosive zu untersuchende Medien mit moderaten Temperaturen, bei denen keine Spülung des Prozessanschlusses notwendig ist. Bei einem abgesetzten Prozessanschluss, bei dem ein gewisser Abstand zwischen der optischen Analyseeinheit und dem Messvolumen gewünscht und insofern eine Spülung notwendig ist, lässt sich ein größerer Abstand der optischen Analyseeinheit von dem Messvolumen einstellen. Gegebenenfalls lässt sich auf diese Weise auch bewusst ein Totvolumen erzeugen, das für eine Spülung zur Verfügung steht.

Eine besondere Ausführungsform des erfindungsgemäßen Analysegeräts umfasst einen Befestigungsstutzen, der rohrförmig ist. Insbesondere kann eine Optikfassung vorgesehen sein, in der ein Lichtleitelement, das das Licht des Sendeelements in das Messvolumen bzw. aus dem Messvolumen zum Empfängerelement führt, oder ein ein Sichtfenster bildender transparenter Körper vorgesehen ist.

Ein solcher rohrförmiger Befestigungsstutzen lässt sich innerhalb des Flansches auf einfache Weise verschieben und befestigen. Zum Beispiel kann der Flansch an seinem Außenumfang einen radial nach außen weisenden Fortsatz aufweisen, an dem ein an der Klammer vorgesehener radial nach innen weisender Fortsatz angreifen kann, die den Flansch umgreift.

Die Klammer kann den Befestigungsstutzen zum Beispiel kraftschlüssig über eine Klemmverbindung halten.

Um eine formschlüssige Verbindung zu erreichen, kann der Befestigungsstutzen an seinem Außenumfang mehrere erste Eingreifelemente und die Klammer an ihrem Innenumfang zumindest ein korrespondierendes zweites Eingreifelement aufweisen. Je nachdem, mit welchem der ersten Eingreifelemente des Befestigungsstutzens das wenigstens eine zweite Eingreifelement zusammenwirkt, können verschiedene Einstelltiefen des Befestigungsstutzens in dem Flansch realisiert werden.

Bei einer bevorzugten Ausgestaltung sind die ersten Eingreifelemente als Nuten ausgestaltet und das wenigstens eine zweite Eingreifelement der Klammer als eine korrespondierende Feder. Eine Nut/Federverbindung ist besonders stabil um einen entsprechenden Formschluss zu gewährleisten.

In einzelnen Nuten des Befestigungsstutzens können an geeigneter Stelle außerdem auf einfache Weise Dichtungen vorgesehen sein, um den Befestigungsstutzen gegen den Flansch abzudichten.

Besonders vorteilhaft ist eine Ausführungsform, bei der der Flansch lösbar mit dem Messvolumen verbunden werden kann. Auf diese Weise können auf einfache Weise unterschiedliche Flansche an dem Messvolumen befestigt werden, um unterschiedliche Befestigungsstutzen und Analysegeräte zum Einsatz zu bringen.

Ein entsprechender Flansch kann mehrteilig ausgestaltet sein, um verschiedene Flanschlängen einstellen zu können.

Ein erfindungsgemäßes optisches Analysegerät kann auch mit einem Messvolumen eingesetzt werden, in dem ein von dessen Wandung hervorstehender Aufnahmestutzen vorhanden ist, an dessen dem Messvolumen fernen Ende der Flansch des optischen Analysegerätes befestigt werden kann. In den Aufnahmestutzen kann der Befestigungsstutzen des optischen Analysegerätes in gewünschter Tiefe eingeschoben werden, um so unterschiedliche Totvolumina realisieren zu können.

Ein erfindungsgemäßes optisches Analysegerät kann vorteilhaft zur Messung und Beobachtung von Gas eingesetzt werden. Ebenso ist eine Verwendung für Flüssigkeiten möglich.

Insbesondere eignet sich das erfindungsgemäße optische Analysegerät zur Messung von Konzentrationen. Zum Beispiel kann die Streuung von Licht in dem Messvolumen vermessen werden, um die Partikelkonzentration zu bestimmen. Eine solche Messanordnung eignet sich zum Beispiel zur Bestimmung des Staub- oder Rußanteils im Abgas eines Schornsteins. Dazu wird das optische Analysegerät an einer seitlichen Öffnung des Schornsteins angeflanscht, wobei das Innere des Schornsteins das Messvolumen darstellt.

Bei entsprechender Ausgestaltung der optischen Analyseeinheit kann das erfindungsgemäße optische Analysegerät andererseits zum Beispiel auch zur Bestimmung der Zusammensetzung eines Mediums in dem Messvolumen verwendet werden. So kann die optische Analyseeinheit in dem Gehäuse des erfindungsgemäßen optischen Analysegerätes zum Beispiel eine spektroskopische Auswerteeinrichtung für das aus dem Messvolumen empfangene reflektierte Licht umfassen.

Die Erfindung ist jedoch nicht auf solche optische Analysegeräte beschränkt.

Die Erfindung wird im Detail anhand der beiliegenden Figuren geschildert, die Ausführungsformen eines erfindungsgemäßen optischen Analysegerätes zeigen.
- Fig. 1: zeigt eine Teilschnittansicht des Prozessanschlusses eines erfindungsgemäßen Analysegeräts,
- Fig. 2: zeigt eine schräge Draufsicht auf ein erfindungsgemäßes Analysegerät,
- Fig. 3: zeigt eine andere Ausführungsform mit einem längeren Flansch in einer ersten Verwendungsweise,
- Fig. 4: zeigt die Ausführungsform der Fig. 3 in einer anderen Verwendungsweise,
- Fig. 5: zeigt eine Anwendung mit einer Spüleinrichtung,
- Fig. 6: zeigt eine Teilschnittansicht einer anderen Ausführungsform eines erfindungsgemäßen Analysegerätes in einer Verwendung mit einem speziell ausgestalteten Messvolumen mit einem Anschlussstutzen, und
- Fig. 7: zeigt die Anordnung der Fig. 6 in einem anderen Verwendungszustand.

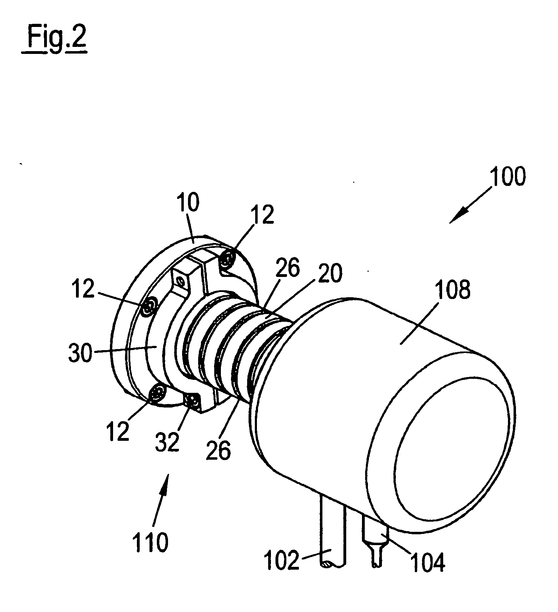

Das in Fig. 2 gezeigte optische Analysegerät 100 weist ein Gehäuse 108 auf. Darin befinden sich zum Beispiel in an sich bekannter Weise ein Sendeelement und ein Empfangselement zum Aussenden bzw. Empfangen von Licht (sichtbares Licht, ultraviolettes Licht oder Infrarotlicht), die eine optische Analyseeinheit bilden. Der von dem Sendeelement ausgesendete Lichtstrahl wird durch einen Befestigungsstutzen 26 in Richtung eines Messvolumens gesendet, innerhalb dessen sich ein Medium befindet, dessen Konzentration oder Zusammensetzung gemessen werden soll. Das Messvolumen kann zum Beispiel ein Kanal sein, durch den das Medium strömt, oder ein Behältnis, in dem sich das Medium befindet. Das optische Analysegerät 100 wird dazu über mit einem Flansch 10 mit den Befestigungsschrauben 12 an einer Aufnahmeöffnung des hier nicht dargestellten Messvolumens angeschraubt. An dem optischen Analysegerät 100 befinden sich Stutzen 102, 104, durch die elektrische Zuführungen, Steuerleitungen und Datenleitungen in das Gehäuse 108 in an sich bekannter Weise eingeführt sind.

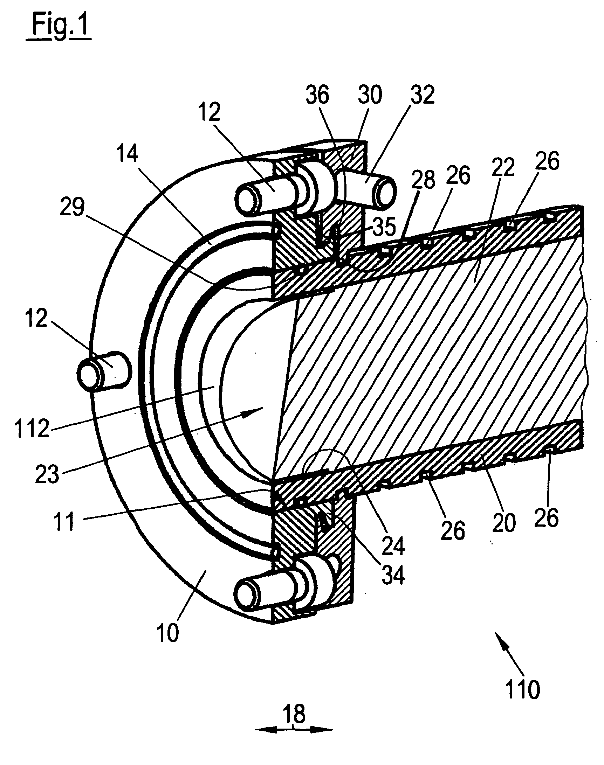

Die Ausgestaltung des Anschlussteils 110 des Analysegeräts 100 an das Messvolumen ist im Detail in Fig. 1 dargestellt.

An der linken Seite der Fig. 1 befindet sich der Flansch 10, mit dessen Hilfe das Anschlussteil an dem nicht gezeigten Messvolumen befestigt werden kann. Dazu sind Befestigungsschrauben 12 vorgesehen, die in entsprechende Gewindeöffnungen in der Wandung des Messvolumens eingeschraubt werden können. Zur Abdichtung des Flansches 10 gegenüber der Wandung des Messvolumens ist eine O-Ring-Dichtung 14 in einer entsprechenden Nut des Flansches 10 vorgesehen. Der Flansch 10 weist eine innere Öffnung 11 auf, in die ein Befestigungsstutzen 20 geschoben werden kann, der - wie es in Fig. 2 sichtbar ist - auf einer Seite des Gehäuses 108 aus dem optischen Analysegerät 100 herausragt. Am gehäusefernen Ende des Befestigungsstutzens befindet sich eine Öffnung 21, die im Betrieb in Richtung des Messvolumens weist. Der Befestigungsstutzen 20 ist in noch zu beschreibender Weise mit einer Klammer 30 an dem Flansch 10 befestigt. Über eine O-Ring-Dichtung 29 ist er gegen die innere Öffnung 11 des Flansches 10 abgedichtet.

In den Befestigungsstutzen 20 ist ein optisches Leitelement 22, zum Beispiel eine optische Faser, geführt, die über geeignete Befestigungsmittel 24 in an sich bekannter Weise in dem Befestigungsstutzen 20 befestigt (zum Beispiel eingeklebt) und gegebenenfalls abgedichtet sein kann. Der Befestigungsstutzen 20 kann dazu zum Beispiel eine Optikfassung umfassen.

Das optische Leitelement 22 dient zur Führung des Lichts des Sendeelements aus dem optischen Analysegerät 100 in Richtung des auf der linken Seite der Fig. 1 zu befestigenden Messvolumens. Die Grenzfläche des optischen Leitelementes 22 in Richtung des Messvolumens ist mit Bezugsziffer 23 bezeichnet.

Alternativ kann anstelle des optischen Leitelements ein optisches Sichtfenster oder eine Linse eingesetzt und gegebenenfalls abgedichtet sein. Zur Vermeidung von Reflexionen kann die optische Grenzfläche des optischen Leitelementes 22 bzw. des optischen Sichtfensters zum Messvolumen hin schräg gestellt sein.

Auf der rechten Seite der Fig. 1 schließt sich das in dieser Figur nicht gezeigte Gehäuse 108 an.

Am Außenumfang des Befestigungsstutzens 20 befinden sich mehrere Nuten 26 in definiertem Abstand. In die Nuten 26 können am Innenumfang der Klammer 30 vorgesehene Federn 28 eingreifen, um einen Formschluss zu ermöglichen. Die Nuten 26 können auch so angeordnet sein, dass zumindest eine davon zur Aufnahme eines O-Ringes 29 dient, die den Befestigungsstutzen 20 gegen den Flansch 10 abdichtet.

Die Klammer 30 weist außerdem an ihrem Innenumfang einen umlaufenden Fortsatz 35 auf, der eine Ausnehmung 36 abgrenzt, die den umlaufenden nach außen weisenden Fortsatz 34 des Flansches 10 umfasst.

Ist die Klammer 30 nicht angebracht, kann der Befestigungsstutzen 20 in Richtung 18 durch den Flansch geschoben werden.

Mit der erfindungsgemäßen Anordnung ist eine flexible Einstellung möglich. Der Flansch 10 kann mit Hilfe der Befestigungsschrauben 12 an einem Messvolumen befestigt werden, so dass die Öffnung 11 mit einer entsprechenden Aufnahmeöffnung in dem Messvolumen korrespondiert. Der Flansch wird dabei durch die O-Ring-Dichtung 14 gegenüber der Wandung des Messvolumens angedichtet. In den Flansch kann der Befestigungsstutzen 20 mit dem optischen Leitelement 22 eingeschoben werden. Eine O-Ring-Dichtung 29 in einer der Nuten 26 dient dabei zur Abdichtung der Außenfläche des Befestigungsstutzens 20 gegen die Innenfläche 11 des Flansches 10.

Der Befestigungsstutzen 20 wird mit der Klammer 30 an dem Flansch 10 befestigt. Dazu wird die Klammer um den Fortsatz 34 gelegt und die Feder 28 zum Eingriff mit einer der Nuten 26 gebracht. Durch Festziehen der Schrauben 32 (Fig. 2) wird die Klammer 30 an dem Befestigungsstutzen 20 formschlüssig festgehalten.

In Fig. 1 ist eine Verwendung dargestellt, bei der ein möglichst kleines Totvolumen 112 vorgesehen ist.

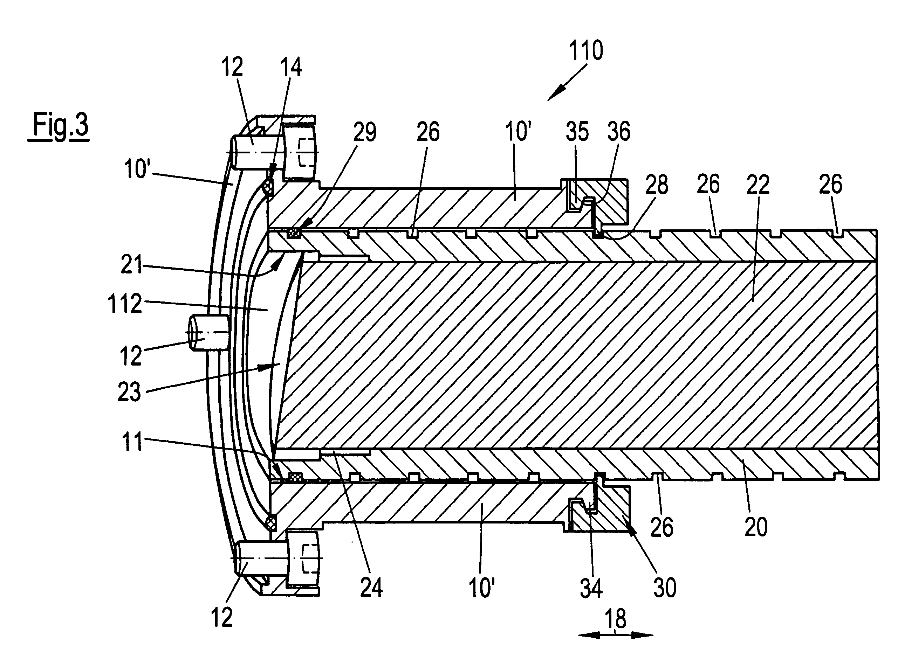

Fig. 3 zeigt eine weitere Ausführungsform mit einem in axialer Richtung längeren Flansch 10'. Das bei der Ausgestaltung der Fig. 3 entstehende Totvolumen 112 entspricht in der Größe in etwa dem Totvolumen der Ausführungsform der Fig. 1. Durch die längere Flanschgestaltung ist jedoch eine sicherere Verbindung zwischen dem Befestigungsstutzen 20 möglich, die zuverlässiger gegen ein Verkippen gesichert ist, weil er sich über eine größere Fläche an der Innenfläche 11 des Flansches 10 abstützen kann. Die übrige Funktion entspricht der mit Bezug zur Ausführungsform der Fig. 1 beschriebenen Funktionsweise. Gleiche oder ähnliche Elemente sind daher mit gleichen Bezugsziffern bezeichnet.

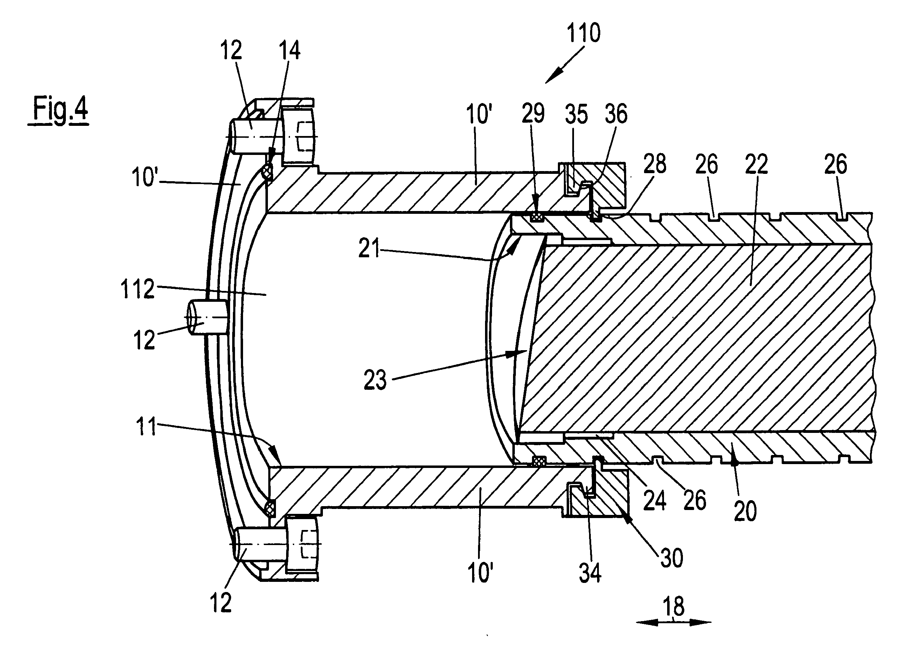

Fig. 4 zeigt dieselbe Ausführungsform in einem anderen Verwendungsmodus. Hier ist der Befestigungsstutzen 20 nicht so weit in dem Flansch 10' eingeschoben worden und dann mit der Klammer 30 in beschriebener Weise unter Verwendung einer der Nuten 26 befestigt worden. So entsteht ein größeres Totvolumen 112, das bei manchen Anwendungen wünschenswert ist (zum Beispiel bei Verwendung von korrosivem Gas in dem Messvolumen).

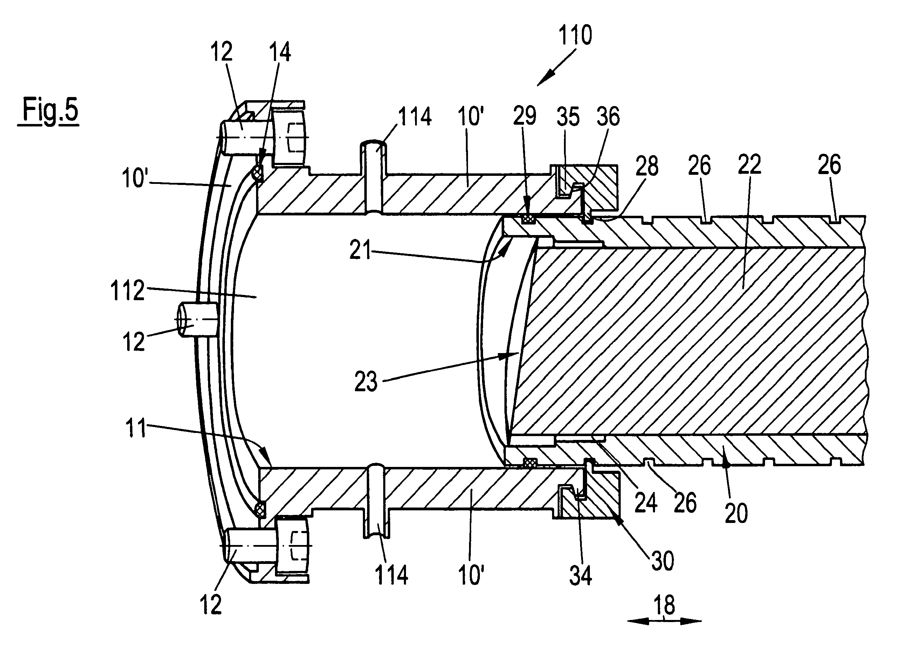

Insbesondere bei einer solchen Ausführungsform kann auch eine Spülung vorgesehen sein, die das Totvolumen 112 spült und so definierte Verhältnisse schafft. Dazu können in dem Flansch 10' zum Beispiel Öffnungen und Anschlüsse 114 zur Einleitung von Spülgas vorgesehen sein. Eine solche Anordnung zeigt beispielhaft die Fig. 5.

Durch Verwendung unterschiedlicher Flansche können unterschiedliche Anschlussgeometrien leicht realisiert werden.

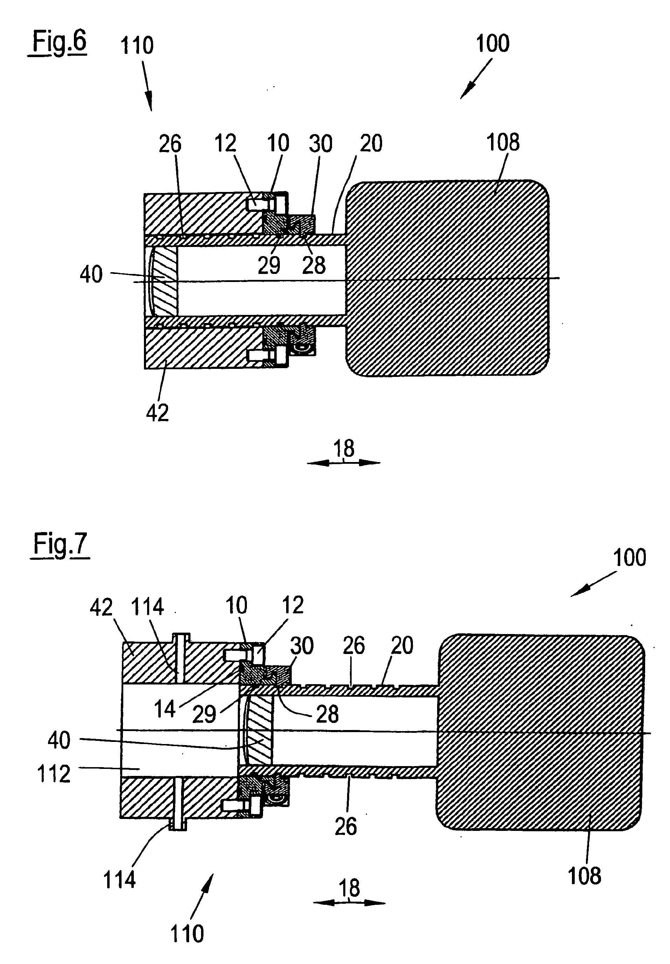

Die Fig. 6 und 7 zeigen eine Ausführungsform ähnlich derjenigen der Fig. 1 in einem anderen Verwendungszustand. Insbesondere wird das erfindungsgemäße optische Analysegerät 100 hier mit einem Messvolumen eingesetzt, dessen Wandung einen Aufnahmestutzen 42 aufweist, der von dem Messvolumen weg gerichtet ist.

Auf der linken Seite des Aufnahmestutzens 42 schließt der Aufnahmestutzen an die Wandung des nicht gezeigten Messvolumens an. Die Anordnung des Flansches 10, der Klammer 30 und des Befestigungsstutzens 20 entspricht der Ausführungsform der Fig. 1.

Abweichend von den in den Fig. 1 und 3 bis 5 gezeigten Ausgestaltungen ist hier kein optisches Leitelement 22 in dem optischen Analysegerät 100 vorgesehen, sondern ein Sichtfenster 40 aus transparentem Material, durch das das Licht der in dem Gehäuse 108 angeordneten aus Sendelement und Empfangselement bestehenden optischen Analyseeinheit tritt. Das Sichtfenster 40 kann gegebenenfalls auch eine Linsenfunktion erfüllen.

In den Aufnahmestutzen 42 kann der Befestigungsstutzen 20 des optischen Analysegerätes 100 eingeschoben werden.

Fig. 6 zeigt eine Verwendung, bei der der Befestigungsstutzen 20 weit in den Aufnahmestutzen 42 eingeschoben ist, um ein kleines Totvolumen zu erzeugen. Die Feder 28 der Klammer 30 greift hier in eine Nut 26 des Befestigungsstutzens 20 ein, die nahe dem Gehäuse 108 angeordnet ist.

Fig. 7 zeigt eine Verwendung, bei der der Befestigungsstutzen 20 weniger weit in den Aufnahmestutzen 42 des Messvolumens eingeschoben ist. Die Feder 28 greift hier in eine Nut 26 ein, die nahe dem Ende des Befestigungsstutzens 20 angeordnet ist. Es entsteht auf diese Weise ein größeres Totvolumen 112.

Fig. 7 zeigt im Gegensatz zu Fig. 6 einen Schnitt durch eine Ebene, in der Spülgasanschlüsse 114 zur Spülung des Totvolumens 112 erkennbar sind. Bei weiter in den Aufnahmestutzen 42 eingeschobenem Befestigungsstutzen 20 (wie in Fig. 6 dargestellt) werden die Spülgasanschlüsse 114 nicht benutzt, da auch kein so großes Totvolumen 112 vorliegt, wie bei der Verwendung gemäß Fig. 7.

Eine nicht gezeigte Ausführungsform weist zum Beispiel einen Flansch auf, der mehrteilig ausgestaltet ist, insbesondere mehrere aneinander koppelbare Ringe enthält. So können unterschiedlich lange Flanschgeometrien eingestellt werden.

Unter Verwendung einer entsprechenden Optik oder Lichtleiters zur Führung des Messlichtes von der optischen Analyseeinheit zu dem Messvolumen ist es abweichend von den gezeigten Ausführungsformen auch möglich, dass der Befestigungsstutzen nicht geradlinig und/oder zumindest teilweise flexibel ist

Das erfindungsgemäße optische Analysegerät ermöglicht also bei Verwendung geeignet dimensionierter Flansche eine sehr flexible Einstellung des Totvolumens zwischen der optischen Anordnung und dem Messvolumen. Ein Einsatz mit unterschiedlichen Anschlussgeometrien des Messvolumens ist leicht möglich.

### Bezugszeichenliste

- 10, 10': Flansch
- 11: Flanschinnenfläche
- 12: Befestigungsschraube
- 14: O-Ring-Dichtung
- 18: Schieberichtung
- 20: Befestigungsstutzen
- 21: Öffnung des Befestigungsstutzens
- 22: optisches Leitelement
- 23: optische Grenzfläche
- 24: Befestigungsmittel
- 26: Nut
- 28: Feder
- 29: Dichtung
- 30: Klammer
- 32: Klammerschraube
- 34: Fortsatz
- 35: Fortsatz
- 36: Ausnehmung
- 40: Sichtfenster
- 42: Aufnahmestutzen
- 100: optisches Analysegerät
- 102, 104: Anschlüsse
- 108: Gehäuse
- 110: Prozessanschlussstück
- 112: Totvolumen
- 114: Spülgasanschluss

## Patentansprüche

1. Optisches Analysegerät (100) zur Analyse eines Mediums in einem Messvolumen, mit
- einem Gehäuse (108) mit einer Öffnung (21),
- einem Flansch (10, 10') zur Halterung des Gehäuses (108) in einer Aufnahmeöffnung des Messvolumens, und
- einer optischen Analyseeinheit in dem Gehäuse (108) zur optischen Analyse eines Mediums in dem Messvolumen durch die Öffnung (21) hindurch,
**gekennzeichnet durch**
- einen an dem Gehäuse vorgesehenen und die Öffnung (21) umfassenden Befestigungsstutzen (20) zur Befestigung des Gehäuses (108) in dem Flansch (10, 10'), wobei der Befestigungsstutzen (20) eine Außengeometrie aufweist, die an die Innengeometrie des Flansches (10, 10') derart angepasst ist, dass er in dem Flansch (10, 10') in Richtung des Messvolumens und von diesem weg verschoben werden kann, und
- eine Klammer (30), mit der der Flansch (10, 10') und der Befestigungsstutzen (20) form- und/oder kraftschlüssig in unterschiedlichen Stellungen des Befestigungsstutzens (20) in dem Flansch (10, 10') miteinander verbunden werden können.

2. Optisches Analysegerät nach Anspruch 1,
**dadurch gekennzeichnet,**
**dass** die optische Analyseeinheit wenigstens ein Sendeelement in dem Gehäuse (108) zum Aussenden eines Messlichtstrahls durch die Öffnung (21) in das Messvolumen und wenigstens ein Empfangselement in dem Gehäuse (108) zum Empfangen von gestreutem oder transmittiertem Licht aus dem Messvolumen umfasst.

3. Optisches Analysegerät nach einem der Ansprüche 1 oder 2,
**dadurch gekennzeichnet,**
**dass** der Befestigungsstutzen (20) rohrförmig ist.

4. Optisches Analysegerät nach Anspruch 3,
**dadurch gekennzeichnet,**
**dass** der Flansch (10, 10') an seinem Außenumfang einen radial nach außen weisenden Fortsatz (34) aufweist, und die Klammer (30) einen radial nach innen weisenden Fortsatz (35) derart aufweist, dass der nach innen weisende Fortsatz (35) der Klammer (30) den nach außen weisenden Fortsatz (35) des Flansches umgreifen kann.

5. Optisches Analysegerät nach einem der Ansprüche 1 bis 4,
**dadurch gekennzeichnet,**
**dass** der Befestigungsstutzen (20) an seinem Außenumfang mehrere erste Eingreifelemente (26) und die Klammer (30) an ihrem Innenumfang zumindest ein korrespondierendes zweites Eingreifelement (28) aufweisen, wobei die ersten Eingreifelemente (26) derart angeordnet sind, dass der Befestigungsstutzen (20) unterschiedlich weit in die Aufnahmeöffnung des Messvolumens ragt, je nachdem mit welchem der ersten Eingreifelemente (26) des Befestigungsstutzens (20) das wenigstens eine zweite Eingreifelement (28) zusammenwirkt.

6. Optisches Analysegerät nach Anspruch 5,
**dadurch gekennzeichnet,**
**dass** die ersten Eingreifelemente Nuten (26) und das wenigstens eine zweite Eingreifelement eine korrespondierende Feder (28) umfasst.

7. Optisches Analysegerät nach einem der Ansprüche 1 bis 6,
**dadurch gekennzeichnet,**
**dass** der Flansch (10, 10') lösbar mit dem Messvolumen verbunden werden kann.

8. Optisches Analysegerät nach einem der Ansprüche 1 bis 7,
**dadurch gekennzeichnet,**
**dass** der Flansch mehrteilig ausgestaltet ist.

9. Optisches Analysegerät nach einem der Ansprüche 1 bis 8,
**dadurch gekennzeichnet,**
**dass** der Befestigungsstutzen (20) eine Dichtung (29) umfasst, die die Außenseite des Befestigungsstutzens (20) gegenüber der Innenseite des Flansches (10, 10') abdichtet.

10. Optisches Analysegerät nach einem der Ansprüche 1 bis 9,
**dadurch gekennzeichnet,**
**dass** es ein Partikelkonzentrationsmessgerät zur Messung einer Partikelkonzentration in dem Messvolumen ist.

11. Optisches Analysegerät nach einem der Ansprüche 1 bis 9,
**dadurch gekennzeichnet,**
**dass** es ein Gerät zur Konzentrationsbestimmung und/oder Zusammensetzungsbestimmung eines Gases ist.

12. Optisches Analysegerät nach einem der Ansprüche 1 bis 9,
**dadurch gekennzeichnet,**
**dass** es ein Gerät zur Konzentrationsbestimmung und/oder Zusammensetzungsbestimmung einer Flüssigkeit ist.

## Claims

1. An optical analysis device (100) for analyzing a medium in a measurement volume, comprising
- a housing (108) having an opening (21);
- a flange (10, 10') for holding the housing (108) in a reception opening of the measurement volume; and
- an optical analysis unit in the housing (108) for the optical analysis of a medium in the measurement volume through the opening (21),
**characterized by**
- a fastening stub (20) provided at the housing and including the opening (21) for fastening the housing (108) in the flange (10, 10'), with the fastening stub (20) having an outer geometry which is matched to the inner geometry of the flange (10, 10') such that it can be pushed in the flange (10, 10') in the direction of the measurement volume and away from it; and
- a clip (30) with which the flange (10, 10') and the fastening stub (20) can be connected to one another in a form-matched and/or force-transmitting manner in different positions of the fastening stub (20) in the flange (10, 10').

2. An optical analysis device in accordance with claim 1,
**characterized in that**
the optical analysis unit includes at least one transmission element in the housing (108) for transmitting a measurement light beam through the opening (21) into the measurement volume and at least one reception element in the housing (108) for receiving scattered light or transmitted light from the measurement volume.

3. An optical analysis device in accordance with one of the claims 1 or 2,
**characterized in that**
the fastening stub (20) is tubular.

4. An optical analysis device in accordance with claim 3,
**characterized in that**
the flange (10, 10') has a radially outwardly facing prolongation (34) at its outer periphery and the clip (30) has a radially inwardly facing prolongation (35) such that the inwardly facing prolongation (35) of the clip (30) can engage around the outwardly facing prolongation (35) of the flange.

5. An optical analysis device in accordance with any one of the claims 1 to 4,
**characterized in that**
the fastening stub (20) has a plurality of first engagement elements (26) at its outer periphery and the clip (30) has at least one corresponding second engagement element (28) at its inner periphery (28), with the first engagement elements (26) being arranged such that the fastening stub (20) projects differently far into the reception opening of the measurement volume depending on which of the first engagement elements (26) of the fastening stub (20) the at least one second engagement element (28) cooperates with.

6. An optical analysis device in accordance with claim 5,
**characterized in that**
the first engagement elements include grooves (26) and the at least one second engagement element includes a corresponding tongue (28).

7. An optical analysis device in accordance with any one of the claims 1 to 6,
**characterized in that**
the flange (10, 10') can be releasably connected to the measurement volume.

8. An optical analysis device in accordance with any one of the claims 1 to 7,
**characterized in that**
the flange is designed in a multipart manner.

9. An optical analysis device in accordance with any one of the claims 1 to 8,
**characterized in that**
the fastening stub (20) includes a seal (29) which seals the outer side of the fastening stub (20) with respect to the inner side of the flange (10, 10').

10. An optical analysis device in accordance with any one of the claims 1 to 9,
**characterized in that**
it is a particle concentration measurement device for measuring a particle concentration in the measurement volume.

11. An optical analysis device in accordance with any one of the claims 1 to 9,
**characterized in that**
it is a device for the concentration determination and/or composition determination of a gas.

12. An optical analysis device in accordance with any one of the claims 1 to 9,
**characterized in that**
it is a device for the concentration determination and/or composition determination of a liquid.

## Revendications

1. Appareil d'analyse optique (100) pour l'analyse d'un milieu dans un volume de mesure, comprenant
- un boîtier (108) avec une ouverture (21),
- une bride (10, 10') pour le maintien du boîtier (108) dans une ouverture de réception du volume de mesure, et
- une unité d'analyse optique dans le boîtier (108) pour l'analyse optique d'un milieu dans le volume de mesure à travers l'ouverture (21),
**caractérisé par**
- un moignon de fixation (20) prévu sur le boîtier et englobant l'ouverture (21) pour la fixation du boîtier (108) dans la bride (10, 10'), dans lequel le moignon de fixation (20) présente une géométrie extérieure qui est adaptée à la géométrie intérieure de la bride (10, 10') de telle façon qu'il peut être déplacé dans la bride (10, 10') en direction du volume de mesure et en éloignement de ce dernier, et
- une pince (30), au moyen de laquelle la bride (10, 10') et le moignon de fixation (20) peuvent être reliés l'un à l'autre en coopération de formes et/ou en coopération de forces dans des situations différentes du moignon de fixation (20) dans la bride (10, 10').

2. Appareil d'analyse optique selon la revendication 1,
**caractérisé en ce que** l'unité d'analyse optique comprend au moins un élément émetteur dans le boîtier (108) pour émettre un rayon lumineux de mesure à travers l'ouverture (21) dans le volume de mesure, et au moins un élément récepteur dans le boîtier (108) pour recevoir la lumière diffusée ou transmise provenant du volume de mesure.

3. Appareil d'analyse optique selon l'une des revendications 1 ou 2,
**caractérisé en ce que** le moignon de fixation (20) est en forme de tube.

4. Appareil d'analyse optique selon la revendication 3,
**caractérisé en ce que** la bride (10, 10') comporte à sa périphérie extérieure un prolongement (34) dirigé radialement vers l'extérieur, et la pince (30) comporte un prolongement (35) dirigé radialement vers l'intérieur de telle façon que le prolongement (35) dirigé vers l'intérieur de la pince (30) peut coiffer le prolongement (35) dirigé vers l'extérieur de la bride.

5. Appareil d'analyse optique selon l'une des revendications 1 à 4,
**caractérisé en ce que** le moignon de fixation (20) comporte plusieurs premiers éléments d'engagement (26) à sa périphérie extérieure, et la pince (30) comporte au moins un second élément d'engagement correspondant (28) à sa périphérie intérieure, dans lequel les premiers éléments d'engagement (26) sont agencés de telle façon que le moignon de fixation (20) pénètre à des distances différentes dans l'ouverture de réception du volume de mesure selon celui des premiers éléments d'engagement (26) du moignon de fixation (20) avec lequel coopère ledit au moins un second élément d'engagement (28).

6. Appareil d'analyse optique selon la revendication 5,
**caractérisé en ce que** les premiers éléments d'engagement incluent des rainures (26), et ledit au moins un second élément d'engagement inclut une languette correspondante (28).

7. Appareil d'analyse optique selon l'une des revendications 1 à 6,
**caractérisé en ce que** la bride (10, 10') peut être reliée de façon détachable au volume de mesure.

8. Appareil d'analyse optique selon l'une des revendications 1 à 7,
**caractérisé en ce que** la bride est conçue en plusieurs pièces.

9. Appareil d'analyse optique selon l'une des revendications 1 à 8,
**caractérisé en ce que** le moignon de fixation (20) comporte un joint (29), qui étanche la face extérieure du moignon de fixation (20) vis-à-vis de la face intérieure de la bride (10, 10').

10. Appareil d'analyse optique selon l'une des revendications 1 à 9, **caractérisé en ce qu'**il est un appareil de mesure de concentration de particules pour la mesure d'une concentration de particules dans le volume de mesure.

11. Appareil d'analyse optique selon l'une des revendications 1 à 9, **caractérisé en ce qu'**il est un appareil pour la détermination de concentration et/ou la détermination de composition d'un gaz.

12. Appareil d'analyse optique selon l'une des revendications 1 à 9, **caractérisé en ce qu'**il est un appareil pour la détermination de concentration et/ou la détermination de composition d'un liquide.
